# FASCICULE DE BREVET EUROPEEN

(11) **EP 3 565 771 B1**
(45) Date de publication et mention de la délivrance du brevet: **03.02.2021**
(21) Numéro de dépôt: 17825895.0
(22) Date de dépôt: 04.12.2017
(51) Int. Cl.: B65G 1/04, B65G 1/06

(54) **PROCÉDÉ ET INSTALLATION DE STOCKAGE ET DE DISTRIBUTION AUTOMATISÉE D'OBJETS**
VERFAHREN UND ANLAGE ZUM AUTOMATISCHEN AUFBEWAHRUNG UND VERTEILUNG VON OBJEKTEN
METHOD AND FACILITY FOR AUTOMATICALLY STORING AND DISTRIBUTING OBJECTS

(30) Priorité: 03.01.2017 FR 1750034
(43) Date de publication de la demande: 13.11.2019
(73) Titulaire: Neovendis, 13400 Aubagne (FR)
(72) Inventeur: PEYRONEL, Maxence, Jacksonville, Florida 32246 (US)
(74) Mandataire: Weber, Etienne Nicolas
(86) Numéro de dépôt international: PCT/FR2017/053372
(87) Numéro de publication internationale: WO 2018/127632

(56) Documents cités:
- EP-A1- 1 329 398
- WO-A1-2007/053010
- AT-A1- 508 269
- CA-A1- 2 747 796

## Description

### Domaine technique

La présente invention concerne une installation de stockage et de distribution automatisée d'objets et un procédé de prélèvement d'objets d'une telle installation.

L'invention trouve des applications pour le stockage et la distribution automatisée de pièces détachées, de colis ou d'articles offerts à la vente. Les objets stockés peuvent être de forme et de taille diverses.

L'invention trouve en particulier des applications pour des magasins à distribution automatique d'objets ou d'articles tels que des produits alimentaires, des articles de droguerie, des articles de bricolage, des articles de pharmacie ou de parapharmacie, des objets multimédia ou des jouets. La liste n'est pas exhaustive.

### Etat de la technique antérieure

L'état de la technique antérieure selon le préambule de la revendication 1 est illustré par le document EP 1 329 398. Ce document décrit un procédé et une installation automatisée de stockage et de distribution d'objets, dont la présente invention constitue un perfectionnement.

La description ci-après de l'installation du document EP 1 329 298 peut également être retenue comme une description partielle de l'installation de l'invention qui en reprend l'essentiel des caractéristiques.

L'installation automatisée de stockage et de distribution d'objets comprend un certain nombre de rayonnages sur lesquels les objets sont stockés. Les rayonnages sont pourvus de convoyeurs dits libres, sous la forme de bandes de convoyage, sur lesquelles sont disposés les objets. Des objets identiques sont disposés à la suite les uns des autres sur les mêmes convoyeurs d'un rayonnage. La mise en place des objets sur les rayonnages n'est pas automatisée mais effectuée par des opérateurs qui alimentent ou réalimentent le stock d'objets. Les convoyeurs libres sont dépourvus de moyens moteurs, ils sont disposés parallèlement à un axe d'extraction et permettent le déplacement selon cet axe des objets sur les rayonnages.

L'installation comprend par ailleurs un extracteur dont la fonction est d'aller prélever un ou plusieurs objets dans un ou plusieurs rayonnages et de les acheminer vers une zone de distribution, La zone de distribution, généralement à l'écart des rayonnages peut être pourvue d'un sas de livraison.

L'extracteur peut occuper une position rétractée, distante des rayonnages, dans laquelle il présente une liberté de déplacement par rapport aux rayonnages. En fonction d'une commande d'un objet déterminé, l'extracteur peut ainsi venir se positionner en face d'un rayonnage sur lequel se trouve cet objet

Lorsqu'il est en face d'un rayonnage, l'extracteur peut être avancé depuis la position rétractée vers une position dite d'accostage dans laquelle il vient en contact avec le rayonnage sélectionné de manière à opérer un prélèvement de l'objet sélectionné.

Dans la position d'accostage un ou plusieurs entraineurs mécaniques de l'extracteur viennent en prise avec un ou plusieurs convoyeurs libres, c'est-à-dire les bandes de convoyage du rayonnage sélectionné. L'entrainement de ces convoyeurs provoque le déplacement des objets sélectionnés depuis le rayonnage en question jusque sur l'extracteur.

Comme des objets identiques sont stockés à la suite les uns des autres sur les mêmes convoyeurs, l'entrainement des convoyeurs libres du rayonnage par l'extracteur est poursuivi jusqu'au déchargement complet de l'objet sélectionné, ou d'un nombre souhaité d'exemplaires de cet objet depuis le rayonnage jusque sur l'extracteur.

Le déchargement complet d'un objet ou de plusieurs objets sélectionnés est constaté au moyen d'une barrière optique disposée sur le chemin des objets le long de l'axe d'extraction, de sorte que les objets coupent la barrière optique tant que leur extraction complète du rayonnage n'est pas achevée. Lorsque l'extraction est achevée la barrière optique est rétablie. Ceci permet d'émettre un signal de fin de prélèvement utilisé pour interrompre l'entrainement des convoyeurs concernés.

### Exposé de l'invention

L'exposé de l'invention mentionne un certain nombre de caractéristiques déjà évoquées ou décries en relation avec la description de l'état de la technique du document EP 1 329 398 ci-dessus.

L'invention procède de l'identification d'une difficulté technique susceptible de se manifester notamment lorsque l'extracteur est amené à prélever des objets disposés sur un rayonnage comprenant côte à côte des objets devant être prélevés et des objets ne devant pas être prélevés. Dans une telle situation, seuls les entraineurs correspondant aux convoyeurs libres supportant les objets à prélever sont actionnés de sorte que seuls les objets sélectionnés sont transférés sur l'extracteur. Les objets non sélectionnés restent immobiles sur les convoyeurs libres du rayonnage qui ne sont pas entraînés.

La difficulté technique peut se manifester lorsqu'un objet non sélectionné n'occupe pas sa place normale sur le rayonnage mais fait accidentellement ou inopinément saillie sur le bord du rayonnage. Dans ce cas, en effet, l'objet en question risque d'occulter de manière parasite et permanente la barrière optique lorsque l'extracteur se trouve en position d'accostage sur ce rayonnage. La barrière optique occultée ne permet ainsi plus de détecter la fin du prélèvement d'un ou de plusieurs objets sélectionnés se trouvant sur convoyeurs libres voisins de ceux portant l'objet non sélectionné qui se trouve dans une position saillante. Ainsi, et en l'absence d'un signal de fin de prélèvement, l'ensemble des objets se trouvant à la suite de l'objet sélectionnés risquent d'être transférés sur l'extracteur.

Par ailleurs en l'absence d'un signal de fin de prélèvement l'extracteur risque de demeurer en position d'accostage pendant une durée indéterminée.

L'invention a pour but d'obvier ces difficultés et de proposer une installation et un procédé d'extraction permettant de garantir un fonctionnement plus fiable.

En particulier l'invention a pour but de proposer une installation et un procédé de prélèvement évitant une situation dans laquelle un objet mal disposé sur les rayonnages ne vienne perturber un cycle de prélèvement d'objets sélectionnés. Un but de l'invention est également de proposer une solution qui soit peu onéreuse et qui puisse aisément être mise en place sur des installations existantes.

Pour atteindre ces buts, l'invention concerne plus précisément une installation de stockage et de distribution automatisée d'objets comprenant :
- un ensemble de rayonnages à convoyeurs libres pour le stockage d'objets, chaque rayonnage comprenant une pluralité de convoyeurs libres agencés selon au moins un plan de stockage et parallèlement à un axe d'extraction,
- un extracteur, comprenant une plateforme agencée selon un plan d'extraction, et, à l'extrémité de la plateforme, un bord d'accostage, la plateforme et le bord d'accostage présentant une largeur supérieure à une largeur des convoyeurs libres perpendiculairement à l'axe d'extraction, l'extracteur pouvant être déplacé, parallèlement à l'axe d'extraction, entre au moins:
   une position rétractée, distante des rayonnages, et au moins
   une position d'accostage dans laquelle un bord d'accostage de l'extracteur est adjacent à au moins un rayonnage, et dans laquelle le plan de d'extraction est sensiblement confondu avec le plan de stockage dudit rayonnage,
      l'extracteur d'objets présentant au moins un entraineur mécanique ménagé sur le bord d'accostage et configuré pour venir en prise avec au moins un convoyeur libre dans la position d'accostage pour entraîner ledit convoyeur libre dans un mouvement de convoyage, lors d'une opération de prélèvement d'objet, pour déplacer au moins un objet du rayonnage à convoyeurs libres sur la plateforme de l'extracteur, parallèlement à l'axe d'extraction,
- l'extracteur comprenant en outre une barrière optique sensiblement perpendiculaire à l'axe d'extraction disposée au voisinage du bord d'accostage de l'extracteur et configurée pour détecter un passage d'objets vers la plateforme.

Conformément à l'invention, l'extracteur comprend en outre au moins un repoussoir d'objets, ménagé sur l'extracteur, de manière sensiblement parallèle à la barrière optique et faisant saillie sur le bord d'accostage à distance du plan d'extraction, le repoussoir d'objets étant configuré pour repousser des objets d'un rayonnage sélectionné, lors d'un déplacement de l'extracteur de la position rétractée vers une position d'accostage décalée dans laquelle le plan d'extraction est décalé verticalement par rapport au plan de stockage d'un rayonnage sélectionné et dans laquelle le repoussoir d'objets fait face au rayonnage sélectionné.

Le fait de repousser les objets d'un rayonnage permet non seulement de les aligner sur le bord de ce rayonnage, ou en léger retrait ou en léger surplomb par rapport au bord du rayonnage, mais surtout permet d'éviter qu'un objet ne dépasse accidentellement du rayonnage et de vienne perturber la barrière optique lors d'un prélèvement d'un objet voisin.

On entend par ensemble de rayonnages des rayonnages susceptibles d'être juxtaposés et/ ou superposés. Chaque rayonnage peut comporter une ou, de préférence plusieurs travées disposées côte à côtes, chaque travée ayant une tête de travée tournée sur une face du rayonnage tournée vers une zone d'évolution de l'extracteur. Dans une même travée, un ensemble d'objets identiques, ou des objets de même référence, peuvent être rangés à la suite les uns des autres. La travée peut comporter un ou plusieurs convoyeurs notamment en fonction de la largeur de la rangée des objets qui y sont disposés. Il est noté que les objets en tant que tels ne font pas partie de l'installation et que leur disposition sur les rayonnages reste à la discrétion de l'utilisateur.

L'extracteur peut comporter un ou plusieurs repoussoirs. Sauf précision contraire, il est fait référence dans la suite de la description à un unique repoussoir, sans toutefois préjuger du nombre de repoussoirs.

On considère que le repoussoir fait face au rayonnage sélectionné lorsqu'il est dans une position susceptible de venir en contact avec des objets disposés sur ce rayonnage, et en particulier avec les objets des têtes de travées embrassées par l'extracteur dans la position d'accostage décalée. Ainsi, lorsqu'il fait face au rayonnage, le repoussoir peut occuper une position légèrement au-dessus du plan de stockage du rayonnage considéré, pour mieux appuyer sur les objets.

On considère par ailleurs que le repoussoir est à distance du plan de la plateforme de l'extracteur lorsqu'il est décalé verticalement par rapport à ce plan, de manière à ne pas gêner le prélèvement d'objets. Il en résulte que la position d'accostage et une position d'accostage dite décalée présentant entre elles un décalage vertical. On considère que l'extracteur peut être déplacé entre une position d'accostage et une position rétractée lorsque tout ou partie de l'extracteur présente une telle mobilité. En particulier l'extracteur peut comporter un tiroir pouvant coulisser entre la position d'accostage et la position rétractée.

Comme indiqué ci-dessus, l'extracteur et en particulier sa plateforme et son bord d'accostage, présentent une largeur supérieure à celle des convoyeurs libres des rayonnages. Ainsi, dans la position d'accostage l'extracteur fait face à une pluralité de convoyeurs libres, voire à tous les convoyeurs libres d'un rayonnage, Lorsqu'un rayonnage présente une pluralité de travées de la manière évoquée précédemment, la largeur de la plateforme et du bord d'accostage peut être choisie supérieure à celle de plusieurs de ces travées. L'extracteur fait ainsi face à plusieurs travées et peut être configuré pour le prélèvement successif d'objets sur plusieurs travées d'un même rayonnage.

Le décalage entre le repoussoir et le plan de la plateforme de l'extracteur peut être compris, de préférence, entre un dixième de la hauteur minimum séparant des rayonnages superposés de l'ensemble de rayonnages, et deux fois cette hauteur minimum. Dans un cas particulier, où les rayonnages superposés sont uniformément espacés en hauteur, et où le décalage entre le repoussoir et le plan de la plateforme de l'extracteur est voisin de la hauteur séparant des rayonnages superposés, l'accostage de l'extracteur à l'un des rayonnages peut simultanément constituer un accostage décalé au rayonnage immédiatement inférieur, ou supérieur, s'il existe. Un prélèvement d'objets sur un rayonnage permet alors une opération de repoussage concomitante des objets du rayonnage inférieur, ou supérieur, selon le sens du décalage du repoussoir au-dessus ou en dessous du plan de le plateforme.

Selon une réalisation préférée de l'installation, le repoussoir peut être disposé sous le plan de la plateforme de l'extracteur. Ainsi, lors de la position d'accostage décalée la plateforme de l'extracteur se trouve plus haut que le plan de stockage sur lequel les objets sont repoussés.

Le repoussoir peut être disposé, par exemple, au voisinage de l'entraineur mécanique qui peut être lui-même disposé sous plan d'extraction de la plateforme de l'extracteur. Une telle disposition permet une construction compacte de l'extracteur et des rayonnages et évite toute perturbation lors d'un prélèvement d'objets sur les rayonnages.

Selon une conformation particulière de l'extracteur, celui-ci peut être pourvu d'un tiroir mobile présentant une liberté de déplacement parallèlement à l'axe d'extraction, Dans ce cas le repoussoir peut être solidaire du tiroir mobile, et être appliqué contre les objets se trouvant sur un rayonnage dans un mouvement du tiroir mobile.

On entend par tiroir mobile une partie mobile de l'extracteur comportant notamment la plateforme, l'entraineur mécanique et le repoussoir. Cette partie mobile peut être montée coulissante sur une autre partie de l'extracteur ou sur un robot assurant son déplacement par rapport à l'ensemble des rayonnages et/ou entre les rayonnages.

La liberté de déplacement du tiroir mobile parallèle à l'axe d'extraction peut être ainsi mise à profit à la fois pour repousser et aligner les objets sur un rayonnage et pour le prélèvement des objets.

Selon une réalisation préférée de l'extracteur, la plateforme de l'extracteur peut être pourvue de convoyeurs moteurs pour faire avancer sur la plateforme de l'extracteur les objets prélevés dans les rayonnages. Le mouvement des convoyeurs moteurs est de préférence synchronisé avec l'entraineur mécanique. Ainsi le mouvement des convoyeurs moteurs se trouve également synchronisé avec celui des convoyeurs libres des rayonnages lorsque ceux-ci sont actionnés par l'entraineur mécanique dans une position d'accostage.

Le mouvement des convoyeurs s'entend essentiellement comme le défilement de bandes des convoyeurs.

L'invention concerne également un procédé de prélèvement d'objets d'une installation telle que décrite ci-dessus, comprenant :
- la sélection d'au moins un rayonnage comprenant au moins un objet à prélever
- au moins un accostage de l'extracteur en face du rayonnage sélectionné
- une opération de prélèvement d'au moins un objet disposé sur le rayonnage suite à l'accostage, et
- une opération de repoussage d'objets.

L'opération de prélèvement proprement dite peut comporter, suite à l'accostage, un actionnement d'un ou de plusieurs convoyeurs libres du rayonnage sélectionné de manière à transférer un ou plusieurs objets du rayonnage sur la plateforme de l'extracteur. Les convoyeurs sont actionnés au moyen de l'entraineur mécanique. Le transfert d'un ou de plusieurs objets peut être effectué sous le contrôle d'un signal de la barrière optique qui permet de déterminer la réception des objets sur la plateforme de l'extracteur.

Les convoyeurs moteurs de l'extracteur, s'il en dispose, peuvent être actionnés simultanément pour accompagner et achever le convoyage des objets sur la plateforme.

L'opération de repoussage d'objets du rayonnage s'entend comme une opération effectuée au moyen du repoussoir pour aligner les objets d'un rayonnage sur son bord tourné vers une zone d'évolution de l'extracteur, au voisinage de ce bord, en retrait ou en léger surplomb, mais sans atteindre une zone de mesure de la barrière optique. Elle peut avoir lieu notamment lors d'une position d'accostage décalée par rapport au rayonnage en question.

L'opération de repoussage d'objets peut avoir lieu pour le rayonnage sélectionné. En d'autres termes, le repoussage peut être effectué pour les objets d'un rayonnage sélectionné pour un prélèvement d'objets et être réalisé, dans ce cas, de préférence, avant l'opération de prélèvement Ceci permet de garantir le bon alignement des objets en tête de travée sur les rayonnages lors du prélèvement

Selon une possibilité de mise en œuvre particulière du procédé, celui-ci peut comporter une opération de vérification de la continuité de la barrière optique, par exemple une opération de vérification préalable à un prélèvement Dans ce cas l'opération de repoussage peut être conditionnée à un défaut de continuité de la barrière optique constaté lors de l'opération de vérification de la continuité de la barrière optique.

La vérification de la continuité de la barrière optique peut avoir lieu, par exemple, au moment de l'accostage de l'extracteur en face du rayonnage sélectionné et consister à vérifier si la barrière optique demeure ininterrompue, avant le prélèvement d'un objet.

Le repoussage d'objets peut aussi avoir lieu pour un rayonnage différent d'un rayonnage sélectionné pour le prélèvement.

De manière plus générale encore des opérations de repoussage systématiques pour les différents rayonnages peuvent être réalisées, indépendamment de tout prélèvement d'objets. En particulier, des opérations de repoussage peuvent avoir lieu de manière extemporanée après un chargement des rayonnages ou pendant des périodes d'inactivité de l'extracteur, c'est-à-dire des périodes où aucun prélèvement n'est programmé.

Une opération de repoussage des objets d'un rayonnage sélectionné peut comporter un déplacement de l'extracteur, parallèlement à l'axe d'extraction, au-dessus du plan de stockage du rayonnage sélectionné, de sorte que le repoussoir soit disposé en face du rayonnage sélectionné, il s'agit d'un déplacement vers une position d'accostage décalée, déjà évoquée, permettant au repoussoir d'atteindre des objets sur le rayonnage sélectionné.

Le déplacement de l'extracteur en vue d'une opération de repoussage peut être opéré de préférence à distance du plan de stockage d'un autre rayonnage, pour éviter toute interférence. Ceci est alors conditionné notamment par le décalage du repoussoir par rapport au plan d'extraction.

D'autres caractéristiques et avantages de l'invention ressortent de la description qui suit, en référence aux figures des dessins annexés. Cette description est donnée à titre illustratif et non limitatif.

### Brève description des figures

La figure 1 est une représentation schématique générale d'une installation de stockage et de distribution conforme à l'invention.
La figure 2 est une représentation schématique d'une partie d'un ensemble de rayonnages de l'installation.
La figure 3 est une perspective schématique à plus grande échelle d'un rayonnage de l'ensemble de rayonnages de la figure 2.
Les figures 4 à 6 sont des coupes schématiques simplifiées d'une partie d'un rayonnage et d'un extracteur conformes à l'invention et illustrent un prélèvement d'objet.
Les figures 7 et 8 sont des perspectives schématiques simplifiées d'une partie d'un rayonnage et d'un extracteur et illustrent un prélèvement d'objet et une situation de dysfonctionnement possible.
Les figures 9 à 13 sont des coupes schématiques simplifiées d'une partie d'un rayonnage et d'un extracteur et illustrent un procédé de prélèvement incluant une opération de repoussage.
La figure 14 est une perspective d'un extracteur d'une installation conforme à l'invention.
Les figures sont représentées en échelle libre.

### Description détaillée de modes de mise en oeuvre de l'invention

Des parties identiques, similaires ou équivalentes des différentes figures sont indiquées avec les mêmes signes de référence de manière à pouvoir se reporter d'une figure à l'autre.

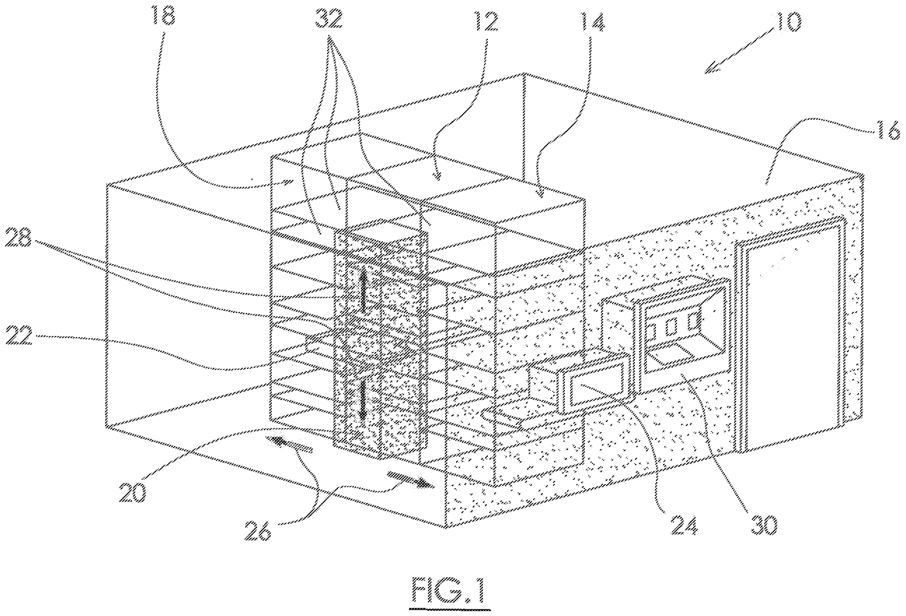

La figure 1 montre une installation 10 de stockage et de distribution automatique d'objets conforme à l'invention, ou pouvant être équipée conformément à l'invention.

l'installation 10 comprend un entrepôt de stockage logeant un ensemble 12 de rayonnages. Un premier côté 14 de l'ensemble de rayonnages 12 est tourné vers une chambre d'alimentation 16. L'ensemble 12 de rayonnages peut être alimenté en objets par son premier côté 14 depuis la chambre d'alimentation. Cette opération est une opération manuelle pouvant être effectuée par des opérateurs ou des opératrices ayant accès à la chambre d'alimentation 16 de l'installation 10. Un deuxième côté 18 de l'ensemble de rayonnages est tourné vers une chambre de distribution dans laquelle évolue un robot de distribution 20. Le robot de distribution 20 représenté très schématiquement est pourvu d'un extracteur 22. Il comprend également des actionneurs, non représentés, pour déplacer l'extracteur dans un plan parallèle au deuxième côté 18 de l'ensemble de rayonnages 12 et depuis l'ensemble de rayonnages 12 vers un ses de distribution 24. Le sas de distribution 24 est prévu pour la mise à disposition du ou des objets prélevés dans l'ensemble 12 de rayonnages, Des flèches 26, 28 indiquent un déplacement horizontal et vertical de l'extracteur 22 par rapport à l'ensemble 12 de rayonnages. La référence 30 indique une interface de commande qui permet à un utilisateur de sélectionner des objets souhaités et le nombre d'objets souhaités. Dans le cas d'une installation destinée à un magasin commercial, l'interface de commande 30 peut aussi être équipée d'une interface de paiement, permettant à l'utilisateur de payer le prix des objets sélectionnés avant de les récupérer dans le ses 24.

On peut observer que l'ensemble de rayonnages 12 comprend plusieurs rayonnages individuels 32 juxtaposés et empilés. Les rayonnages 32 sont représentés de manière très simplifiée et les objets qu'ils sont susceptibles de contenir sont omis sur la figure 1, pour des raisons de clarté.

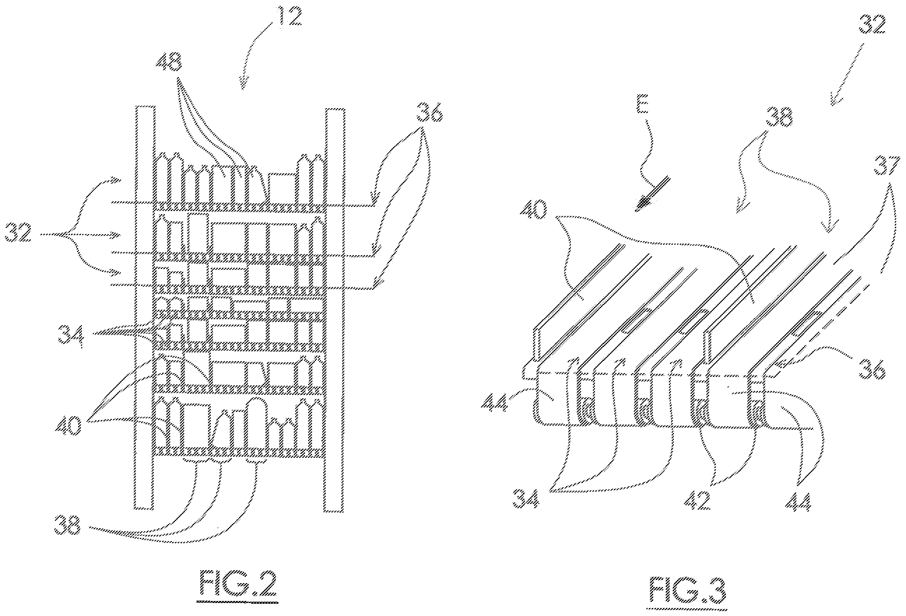

Les rayonnages 32 sont mieux visibles sur la figure 2. La figure 2 montre, de face, une partie de l'ensemble 12 de rayonnages, et en particulier plusieurs rayonnages 32 superposés formant une colonne de stockage.

Chaque rayonnage 32 comprend un ensemble de convoyeurs libres 34 agencés selon un plan de stockage 38.

Les rayonnages 32 sont subdivisés en plusieurs travées 38, réservées à des objets ou produits identiques, ou de même référence. Les travées sont séparées entre elles par de petites glissières 40 évitant le passage accidentel des objets d'une travée à l'autre. La figure 2 montre les têtes de travées et le premier objet 48 de chaque travée, disposé en tête de travée. Les autres objets 48 sont respectivement alignés derrière l'objet apparaissant en tête de travée et ne sont pas visibles sur la figure 2,

Les travées et les glissières 40 sont mieux visibles sur la figure 3 qui montre un détail d'un rayonnage 32. La figure 3 montre également l'agencement des convoyeurs 34 selon un plan de stockage 38 et parallèlement à un axe d'extraction E indiqué par une flèche, Il s'agit de convoyeurs à bandes 37. On considère que les convoyeurs sont agencée selon le plan de stockage lorsque les bandes 37 de ces convoyeurs, et plus particulièrement le partie des bandes susceptible de porter les objets stockés s'étendent selon le plan de stockage.

On peut noter que chaque bande 37 est renvoyée par un rouleau 42 et présente un petit tronçon frontal 44 sensiblement perpendiculaire au plan de stockage 36.

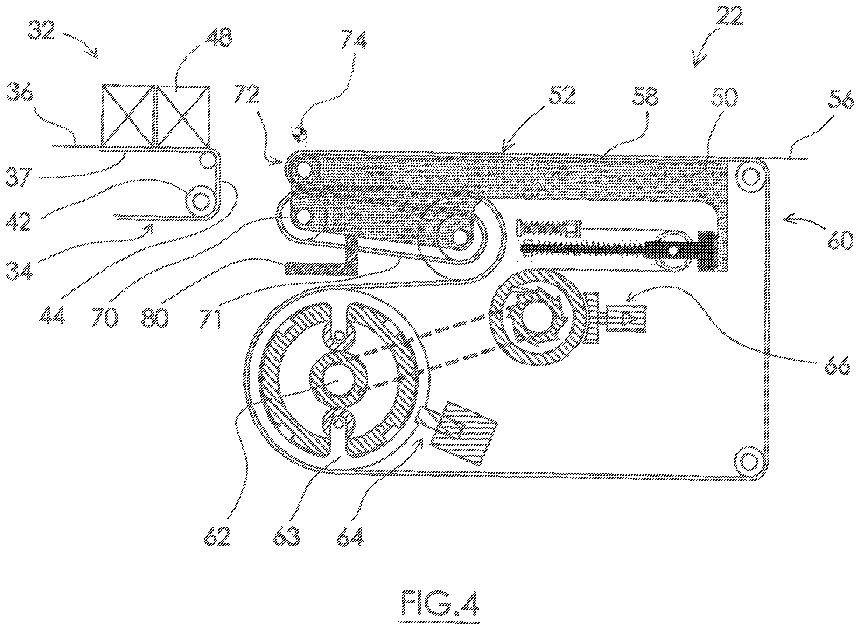

Les figures 4 à 6 montrent une partie d'un rayonnage 32 et d'un extracteur 22 et illustrent les opérations principales d'un procédé de prélèvement.

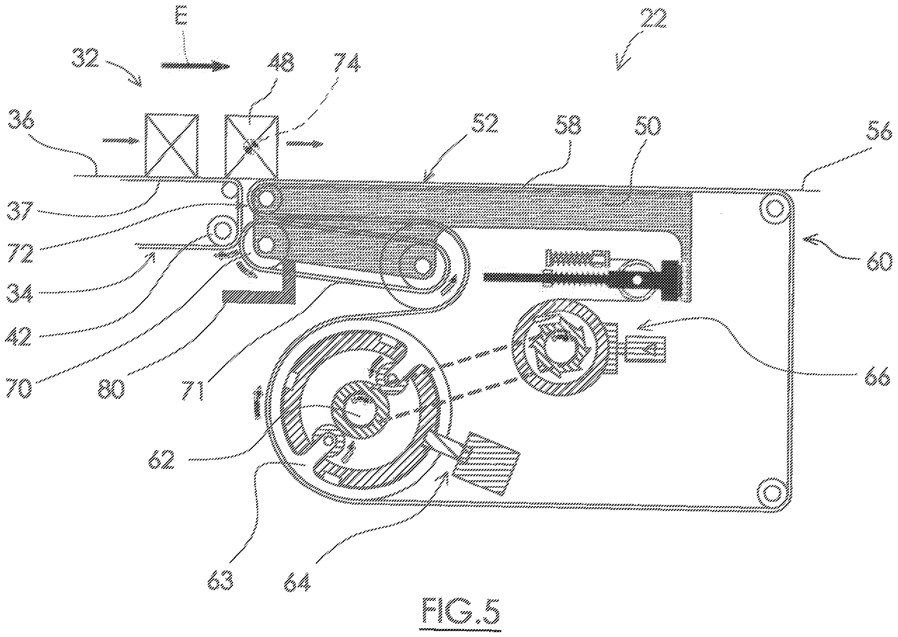

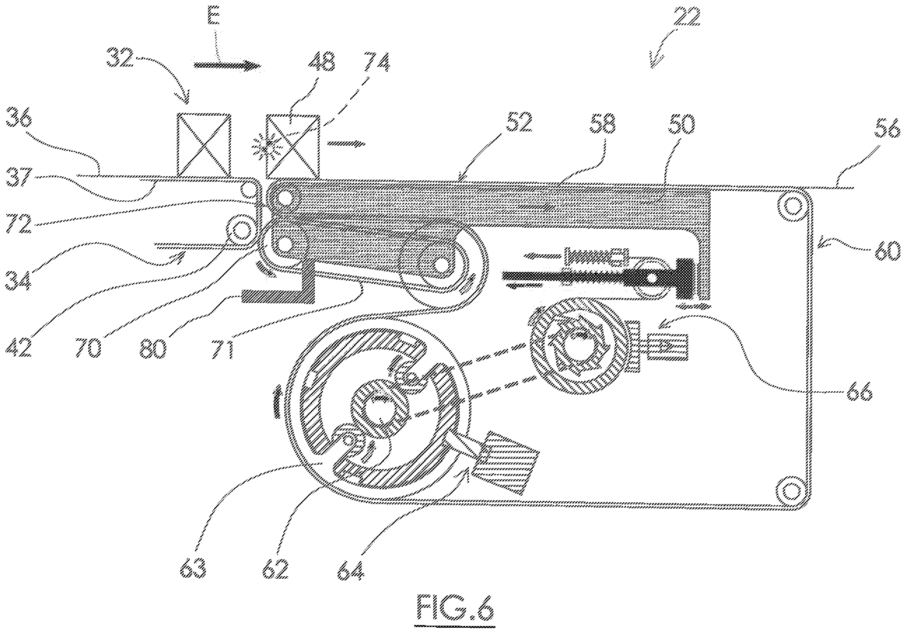

La figure 4 montre l'extracteur 22 dans une position rétractée en face d'un rayonnage 32 sur lequel un objet 48 doit être prélevé. La figure 5 montre l'extracteur en position d'accostage et la figure 6 montre l'achèvement du transfert d'un objet 48 du rayonnage 32 sur l'extracteur 22.

L'extracteur 22 comprend un tiroir mobile 50 et peut passer d'une position rétractée au voisinage d'un rayonnage 32 sélectionné à la position d'accostage sur ce rayonnage.

Une face supérieure du tiroir 50 constitue une plateforme 52 de l'extracteur 22. Elle s'étend selon un plan d'extraction 56 qui se trouve ici confondu avec le plan de stockage 36 du rayonnage 32.

Sur la plateforme passent plusieurs bandes 58 de convoyeurs moteurs 60. Une seule des bandes 58 est visible sur les figures 4 à 6. De préférence, le nombre de convoyeurs moteurs à bande et leur largeur de bande peuvent être ajustés au nombre et à la largeur des bandes 37 des convoyeurs libres 34 des rayonnages.

Les bandes 58 des convoyeurs moteurs 60 sont entrainées par un arbre moteur 62. Un mécanisme d'embrayage 64 est prévu pour chaque bande 58 de chaque convoyeur moteur 80. Il permet d'accoupler ou non un tambour moteur 83 recevant la bande 58 avec l'arbre moteur 62 et provoquer ainsi, ou non, le défilement de la bande. Le mouvement de l'arbre moteur 62 est également communiqué à un mécanisme 66 de déplacement du tiroir. Le mécanisme 66 de déplacement du tiroir peut être actionné de manière à provoquer les déplacements du tiroir entre la position rétractée et la position d'accostage déjà évoquées. Enfin, le mouvement de l'arbre moteur 62 est transmis à un entraineur mécanique sous la forme de galets presseurs 70 se trouvant en légère saillie sur un bord d'accostage 72 de l'extracteur 22. Un ou plusieurs galets presseurs sont associés à chaque bande 58 de chaque convoyeur moteur 60. La transmission du mouvement aux galets depuis l'arbre moteur 62 a lieu par l'intermédiaire des bandes 58 des convoyeurs et de courroies 71, de manière à synchroniser la rotation des galets presseurs 70 avec le défilement des bandes 58 correspondantes. Ainsi les galets presseurs 70 de l'entraineur mécanique associés à l'un des convoyeurs ne sont mis en mouvement que si le convoyeur moteur correspondant est également en mouvement.

On peut encore noter la présence d'une barrière optique 74 disposée à l'aplomb du bord d'accostage 72 de l'extracteur 22. La barrière optique est située légèrement au-dessus du plan d'extraction 56, de manière à intercepter d'éventuels objets passant du rayonnage 32 à l'extracteur 22. La barrière optique est, par exemple, un faisceau lumineux émis par un composant optoélectronique émetteur tel qu'une diode électroluminescente, et reçu par un composant électronique récepteur, tel qu'un phototransistor. Les composants optoélectroniques peuvent être disposés de part et d'autre de la plateforme 52 de l'extracteur. Selon une autre possibilité un composant émetteur et récepteur peut être disposé sur un seul côté de la plateforme 52 de l'extracteur, et un miroir de renvoi du faisceau peut lui être opposé sur l'autre côté de la plateforme,

Le fonctionnement du tiroir 50, du tambour moteur 62, de l'embrayage 64 et des convoyeurs moteurs 60 correspond, en soi, à un fonctionnement connu du document EP1 329 398 déjà cité. Aussi on peut se reporter à ce document pour plus de détails concernant ce fonctionnement.

Sur la figure 4, le tiroir 50, et par extension l'extracteur 22, se trouvent dans une position réfractée. L'embrayage 64 n'est pas enclenché et les bandes 58 des convoyeurs moteurs sont immobiles. Un rayon lumineux d'une barrière optique 74 n'est pas interrompu par le passage d'un objet. Le plan d'extraction 56 est mis au niveau du plan de stockage 36.

Lee bandes 37 des convoyeurs libres 34 sont immobiles, de même que les objets 48 se trouvant sur le rayonnage 32.

Sur la figure 5, le tiroir 50 est en position d'accostage et l'embrayage 64 est enclenché. Les bandes 58 des convoyeurs moteurs 60 sont en mouvement de même que les galets presseurs 70. Les galets presseurs viennent en appui contre une bande 37 des convoyeurs libres 34 à la hauteur du rouleau 42, sur leur tronçon frontal 44, et entraînent le défilement les bandes 37 des convoyeurs libres 34. Il en va de même pour chaque convoyeur moteur 60 pour lequel l'embrayage 64 est encienché, et pour chaque convoyeur libre 34 entrainé.

Ainsi, un ou plusieurs convoyeurs libres sont entrainés en défilement et provoquent le déplacement des objets 48 selon l'axe d'extraction E jusqu'à atteindre la plateforme 52 de l'extracteur. Lorsqu'un objet 48 atteint les convoyeurs moteurs 60 de l'extracteur 22, son convoyage est poursuivi sous l'action de ces convoyeurs. On peut noter qu'une vitesse de défilement des bandes 58 des convoyeurs moteurs 60 peut être prévue légèrement supérieure à celle des bandes 37 des convoyeurs libres 34 entrainés par les galets presseurs 70. Il en résulte une séparation des objets dès que ceux-ci atteignent les convoyeurs moteurs 60.

Les mécanismes d'embrayage des convoyeurs moteurs qui font face à des travées du même rayonnage comportant des objets non sélectionnés, ne sont pas encienchés. Les convoyeurs moteurs correspondants, et les convoyeurs libres qui leurs sont associés, demeurent immobiles.

Lors de leur passage du rayonnage 32 à l'extracteur 22, les objets sélectionnés interrompent momentanément le faisceau de la barrière optique 74.

Lorsque les objets sélectionnés ont atteint la plateforme 52 de l'extracteur 22 le faisceau peut de nouveau passer et la barrière optique est rétablie, comme le montre la figure 6.

Le rétablissement de la barrière optique 74 permet d'établir un signal de commande pour la libération de l'embrayage, l'interruption du mouvement des convoyeurs et le retour de l'extracteur 22 dans la position rétractée.

On peut noter sur les figures 4 à 6 la présence d'un repoussoir d'objets 80 disposé en saillie sur le bord d'accostage 72 sous le plan d'extraction 56. Plus précisément le repoussoir 80 est disposé sous les galets presseurs 70 formant les entraineurs mécaniques. Il est rigidement relié au tiroir 50 de manière à être déplacé de concert avec le tiroir 50.

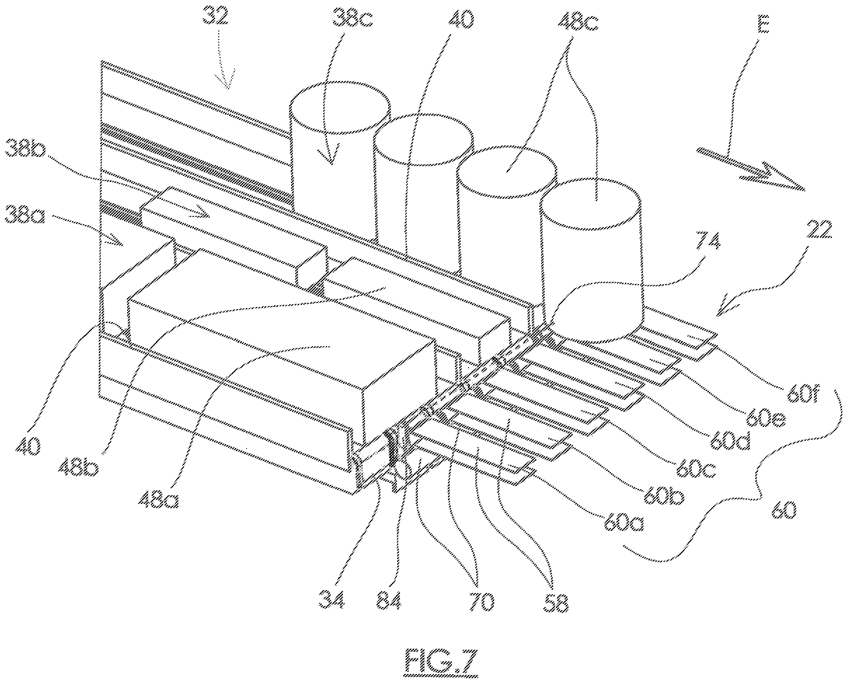

La figure 7 montre de manière schématique et en perspective le prélèvement d'un objet lorsque l'extracteur 22 est en position d'accostage sur un rayonnage 32. Par simplification, seules les bandes 58 des convoyeurs moteurs sont représentées, ainsi que quelques galets presseurs 70 des entraineurs mécaniques.

Dans l'exemple de la figure 7, l'extracteur est pourvu de six convoyeurs moteurs 60 référencés 60a, 60b, 60c, 60d. 60e et 60f. Ils se trouvent en face de trois travées 38a, 38b, 38c d'un rayonnage 32, séparées par des glissières 40. Les travées portent des objets 48a, 48b et 48c respectivement. Chaque travée comprend des objets distincts de ceux des travées voisines. Par ailleurs chaque travée porte plusieurs objets du même type rangés à la suite les uns des autres. Les objets sont posés sur les convoyeurs libres 34.

On peut observer que les convoyeurs libres 34 et les convoyeurs moteurs 60 présentent des bandes de même largeur. On peut aussi observer que l'extracteur comprend six convoyeurs moteurs tandis que le rayonnage 32 comprend sept convoyeurs libres. Ainsi l'extracteur n'embrasse pas toute la largeur du rayonnage dans la position d'accostage.

La barrière optique 74 est représentée par un faisceau optique, indiqué en trait discontinu et émis par un composant optoélectronique 84 disposé au voisinage du bord d'accostage 72 et au voisinage de la bande du premier convoyeur 60a.

La figure 7 montre une situation dans laquelle un exemplaire d'un objet 48c doit être prélevé, il s'agit d'un objet cylindrique se trouvant dans l'une des travées du rayonnage dont la largeur correspond à celle de deux convoyeurs libres. L'extracteur est mis dans une position d'accostage dans laquelle deux de ses convoyeurs moteurs 60e, 60f sont alignés avec les convoyeurs libres de la dernière travée 38c portant l'objet 48c à prélever.

Les convoyeurs moteurs, 60e et 60f, sont mis en mouvement, de même que les entraineurs mécaniques correspondants, non visibles. Ainsi, les convoyeurs libres 34 de la dernière travée 38c en prise avec les galets presseurs des entraineurs mécaniques disposés sous les convoyeurs moteurs 60e et 60f, sont également mis en mouvement Les autres convoyeurs moteurs 60a à 60d. et les autres convoyeurs libres correspondants des travées 38a, 38b demeurent immobiles.

Il en résulte un déplacement de l'ensemble des objets 48c de la dernière travée, selon l'axe d'extraction E en direction de l'extracteur 22. La vitesse de défilement des bandes 58 des convoyeurs moteurs 60s et 60f est choisie légèrement supérieure à celle des bandes des convoyeurs libres 34. Il en résulte une légère séparation des objets dès qu'ils sont en prise avec les bandes 58 des convoyeurs moteurs.

Ainsi, et dés qu'un objet sélectionné 48c est entièrement positionné sur l'extracteur 22, la barrière optique 74 est rétablie. Le faisceau lumineux n'est plus intercepté par l'objet transféré sur l'extracteur. Un signal électrique correspondant du composant optoélectronique 84 permet alors d'interrompre le processus de prélèvement et de retirer l'extracteur du rayonnage. Il en va de même lorsque plusieurs objets sont prélevés à la suite dans une même travée. Dans ce cas le processus de prélèvement est interrompu après le passage du dernier objet sur l'extracteur 22 et après rétablissement de la barrière optique.

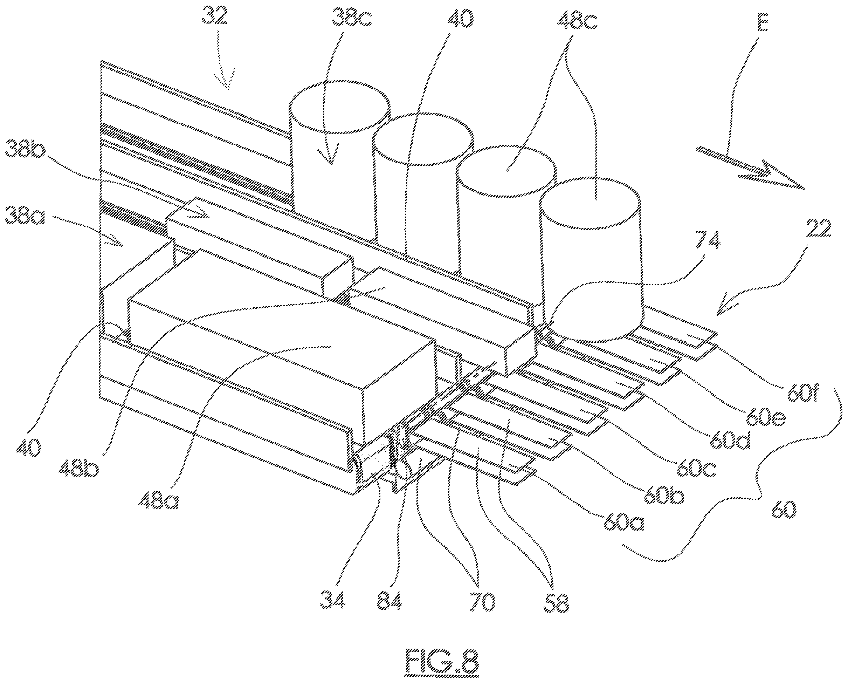

La figure 8, montre une situation de dysfonctionnement possible lors d'un tel prélèvement d'objet. La figure 8 illustre le prélèvement d'un objet 48c dans la troisième travée 38c du rayonnage 32, de manière tout à fait comparable à la figure 7 décrite ci-dessus. On peut toutefois observer qu'un objet non sélectionné 48b, en l'occurrence un objet de forme parallélépipédique, situé dans la deuxième travée 38b, dépasse légèrement du bord du rayonnage 32. Ce dépassement peut résulter, par exemple d'une mauvaise mise en place de l'objet sur le rayonnage. Il peut aussi résulter du fait que l'objet a été poussé ou heurté par un objet suivant disposé dans la même travée ou par un objet disposé dans une travée voisine.

L'objet 48b qui fait inopinément saillie sur le bord du rayonnage 32 s'étend légèrement sur l'extracteur dans sa position d'accostage. En soi cette situation ne serait pas gênante, car l'objet inopinément saillant n'est pas sélectionné. Les convoyeurs correspondants ne sont actionnée et l'objet 48b reste en place sur le rayonnage.

Toutefois, le dépassement de l'objet 48b sur l'extracteur fait que l'objet intercepte le faisceau de la barrière optique 74.

Après le prélèvement normal d'un objet 48c dans la troisième travée 38c, le faisceau de la barrière optique ne peut être rétabli en raison de l'obstacle constitué par l'objet 48b inopinément saillant Aucun signal de fin de prélèvement n'est établi et le mouvement des convoyeurs 60e, 60f sollicités pour le prélèvement de l'objet sélectionné 48c risque de se poursuive indéfiniment, ou, pour le moins, jusqu'au transfert de tous les objets de la troisième travée 48c.

Conformément à l'invention la survenue de cette situation est conjurée, en prévoyant des opérations de repoussage au moyen du ou des repoussoirs prévus sur l'extracteur.

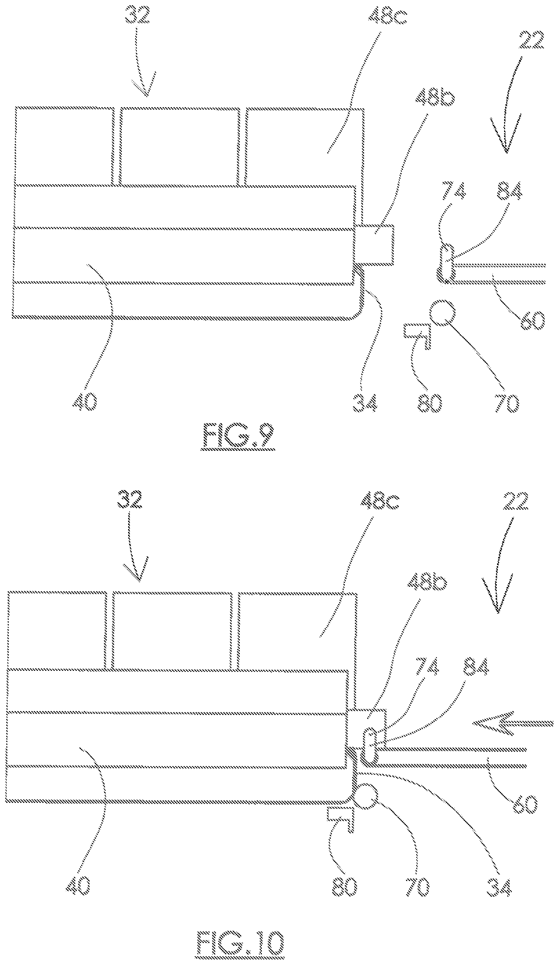

Les étapes d'un procédé de prélèvement incluant une opération de repoussage sont illustrées par les figures 9 à 13.

Les figures 9 à 13 représentent très schématiquement un rayonnage 32 sélectionné avec des objets à préiever 48c, et, le cas échéant, un objet 48b inopinément saillant.

L'extracteur 22 est également simplifié. Seuls sont représentés un convoyeur moteur 60, un galet presseur 70 du mécanisme d'entrainement, un repoussoir 80 et le composant 84 émettant la barrière optique 74.

La figure 9 montre l'extracteur 22 en position rétractée distante du rayonnage 32.

La figure 10 montre un premier accostage sur le rayonnage sélectionné 32 et une vérification de la continuité de la barrière optique 74. Dans l'exemple de la figure 10, un objet inopinément saillant 48b interrompt la barrière optique. Le composant optoélectronique 84 émet un signal correspondant pour interdire le prélèvement d'un objet

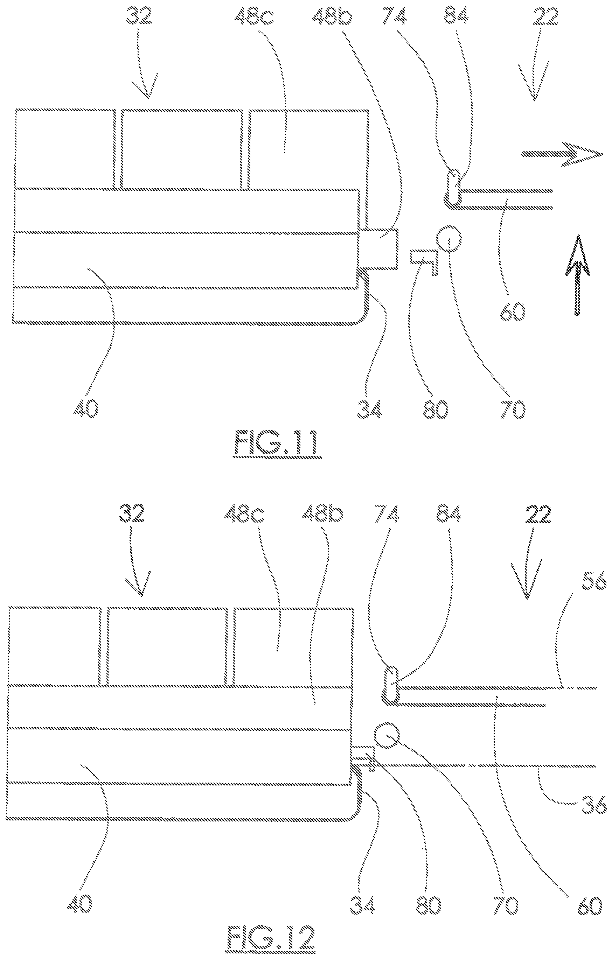

La figure 11 montre un retour de l'extracteur 22 dans une position rétractée et un déplacement de l'extracteur 22 perpendiculaire à l'axe d'extraction pour amener le repoussoir 80 à la hauteur du rayonnage 32, et plus précisément à la hauteur de l'objet 48b Inopinément saillant.

La figure 12 illustre l'avancée de l'extracteur dans une position d'accostage décalée dans laquelle le repoussoir 80 repousse l'objet saillant sur le rayonnage. On peut noter que dans la position d'accostage décalée le convoyeur 60 de l'extracteur et le plan d'extraction 56 se trouvent plus haut que le plan de stockage 36 du rayonnage 32.

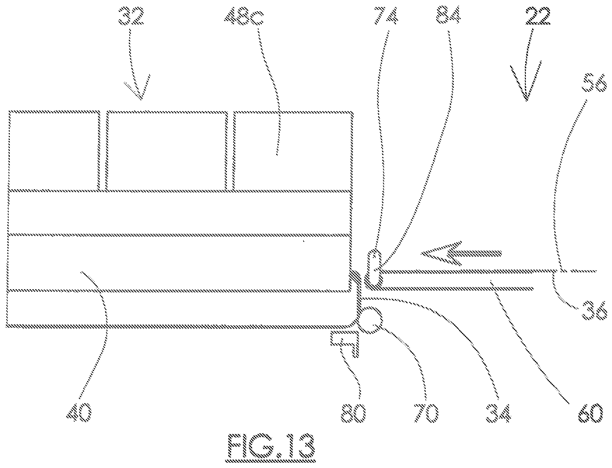

La figure 13 représente un nouvel accostage de prélèvement dans lequel le plan d'extraction 56 et le plan de stockage 36 sont confondus. Aucun objet n'entrave plus la barrière optique dont la continuité est vérifiée. Le prélèvement peut être poursuivi normalement.

Il convient de noter que le repoussage d'objets peut avoir lieu, comme illustré sur les figures, après la détection d'un défaut de continuité de la barrière optique lors d'un premier accostage.

Le repoussage peut aussi avoir lieu lors d'opérations d'accostage décalé opérées de manière systématique, pendant des périodes de repos de l'extracteur c'est-à-dire pendant des périodes lors desquelles aucun prélèvement n'est prévu.

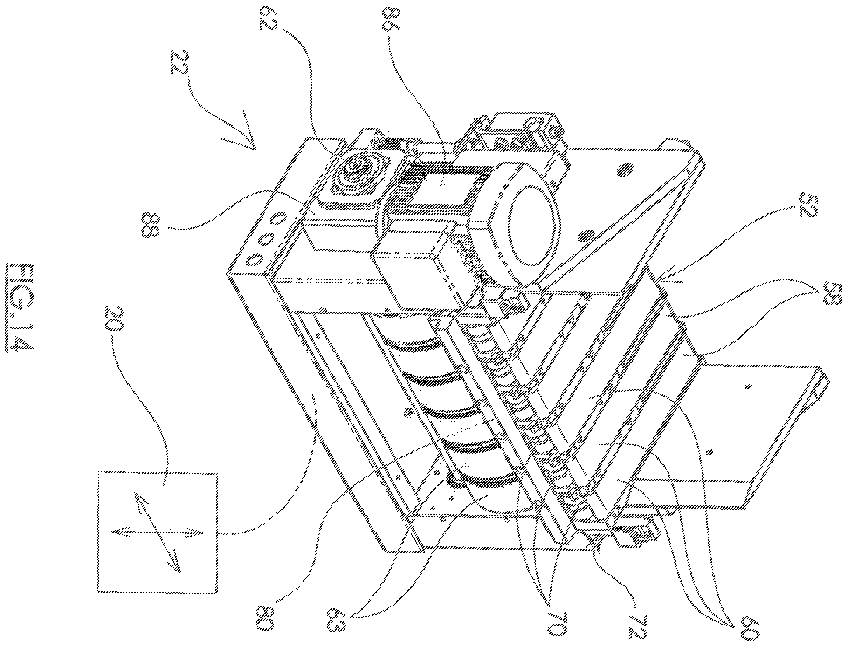

La figure 14 est une perspective de l'extracteur 22. On peut distinguer la plateforme 52 pourvue de six convoyeurs moteurs 60 à bandes 58, A chaque convoyeur moteur 60 sont associés deux galets presseurs 70 servant d'entraîneurs mécaniques pour les convoyeurs libres des rayonnages.

Sous les galets presseurs 70 on distingue également six tambours moteurs 63 sur lesquels passent les bandes 58 des convoyeurs moteurs 60. Les tambours peuvent être accouplés à un arbre moteur 62 au moyen d'embrayages non visibles sur la figure 14. Enfin l'arbre moteur est relié à un moteur électrique 86 par l'intermédiaire d'un réducteur 88.

L'une des principales caractéristiques de l'extracteur 22 est un repoussoir 80 sous la forme d'une barre en matière plastique, solidaire de l'extracteur et adaptée à repousser des objets sur un rayonnage. Le repoussoir 80 est disposé sur un bord d'accostage 72, et en dessous de la plateforme 52. Il peut être déplacé de concert avec les convoyeurs moteurs 60 entre une position rétractée et une position d'accostage déjà décrites.

L'ensemble de l'extracteur peut être monté sur un robot de distribution évoqué en relation avec la figure 1 et indiqué symboliquement avec la référence 20 sur la figure 14.

## Revendications

1. Installation (10) de stockage et de distribution automatisée d'objets comprenant
- un ensemble (12) de rayonnages (32) pour le stockage d'objets, chaque rayonnage (32) comprenant une pluralité de convoyeurs libres (34) agencés selon au moins un plan de stockage (36) et parallèlement à un axe d'extraction (E),
- un extracteur (22), comprenant une plateforme (52) agencée selon un plan d'extraction (56), et à l'extrémité de la plateforme, un bord d'accostage (72), la platerorme et le bord d'accostage présentant une largeur supérieure à une largeur des convoyeurs libres perpendiculairement à l'axe d'extraction, l'extracteur (22) pouvant être déplacé, parallèlement à l'axe d'extraction (E), entre au moins:
une position rétractée, distante des rayonnages, et au moins
une position d'accostage dans laquelle le bord d'accostage (72) de l'extracteur (22) est adjacent à au moins un rayonnage (32), et dans laquelle le plan de d'extraction (56) est sensiblement confondu avec le plan de stockage (36) dudit rayonnage,
l'extracteur d'objets présentant au moins un entraineur mécanique (70) ménagé sur le bord d'accostage (72) et configuré pour venir en prise avec au moins un convoyeur libre (34) dans la position d'accostage pour entrainer ledit convoyeur libre dans un mouvement de convoyage, lors d'une opération de prélèvement d'objet, pour déplacer au moins un objet du rayonnage à convoyeurs libres sur la plateforme (52) de l'extracteur, parallèlement à l'axe d'extraction (E),
- l'extracteur comprenant en outre une barrière optique (74) sensiblement perpendiculaire à l'axe d'extraction, disposée au voisinage du bord d'accostage (72) de l'extracteur (22) et configurée pour détecter un passage d'objets vers la plateforme (52),
**caractérisé en ce que** l'extracteur comprend, en outre, au moins un repoussoir d'objets (80), ménagé sur l'extracteur (22), de manière sensiblement parallèle à la barrière optique (74) en faisant saillie sur le bord d'accostage (72) à distance du plan d'extraction (56), le repoussoir d'objets étant configuré pour repousser des objets d'un rayonnage sélectionné, lors d'un déplacement de l'extracteur (22) de la position rétractée vers une position d'accostage décalée dans laquelle le plan d'extraction (56) est décalé verticalement par rapport au plan de stockage (58) du rayonnage sélectionné et dans laquelle le repoussoir (80) d'objets fait face au rayonnage sélectionné.

2. Installation selon la revendication 1, dans laquelle le repoussoir (80) est disposé sous le plan d'extraction (56).

3. Installation selon l'une quelconque des revendications 1 ou 2, dans laquelle l'extracteur est pourvu de convoyeurs moteurs (60, 60a, 60b, 60c, 80d, 60e 60f) agencés selon le plan d'extraction (56), perpendiculairement au bord d'accostage (72),

4. Installation selon l'une quelconque des revendications précédentes, dans laquelle le repoussoir (80) est solidaire d'un tiroir mobile (50) de l'extracteur (22), présentant une liberté de déplacement parallèlement à l'axe d'extraction (E).

5. Installation selon l'une quelconque des revendications précédentes, dans laquelle le repoussoir (80) est disposé au voisinage de l'entraineur mécanique (70).

6. Installation selon la revendication 1, comportant des rayonnages (32) avec une pluralité travées (38a, 38b. 38c) pour le stockage d'objets de même référence, et dans laquelle la plateforme (52) et le bord d'accostage (72) de l'extracteur (22) présentant une largeur supérieure à la largeur d'une travée.

7. Procédé de prélèvement d'objets d'une Installation conforme à l'une quelconque des revendications précédentes, comprenant :
- la sélection d'un rayonnage (32) comprenant un objet à prélever
- au moins un accostage de l'extracteur (22) en face du rayonnage sélectionné,
- une opération de prélèvement d'au moins un objet disposé sur le rayonnage, et
- au moins une opération de repoussage d'objets.

8. Procédé selon la revendication 7, dans lequel l'opération de repoussage est effectuée pour le rayonnage sélectionné.

9. Procédé selon la revendication 8, comprenant une vérification de la continuité de la barrière optique (74) suite à l'accostage.

10. Procédé selon la revendication 9, dans lequel l'opération de repoussage est conditionnée à un défaut de continuité de la barrière optique constaté lors de la vérification de la continuité de la barrière optique.

11. Procédé selon l'une quelconque des revendications 7 à 10, dans lequel l'opération de repoussage est réalisée avant l'accostage de l'extracteur en face du rayonnage sélectionné pour le prélèvement d'un objet.

12. Procédé selon l'une quelconque des revendications 7 à 11, dans lequel l'opération de repoussage comprend un déplacement de l'extracteur (22), parallèlement à l'axe d'extraction (E), au-dessus du plan de stockage (36) du rayonnage sélectionné (32), le repoussoir (80) étant disposé an face du rayonnage sélectionné.

13. Procédé selon la revendication 12, dans lequel le déplacement de l'extracteur (22) est opéré à distance d'un plan de stockage d'un autre rayonnage de l'ensemble de rayonnages.

14. Procédé selon l'une quelconque des revendications 7 à 13, dans laquelle des opérations de repoussage sont effectuées lors de périodes d'inactivité de l'extracteur.

## Patentansprüche

1. Anlage (10) zur automatischen Aufbewahrung und Verteilung von Objekten, umfassend:
- eine Anordnung (12) von Regalen (32) für die Aufbewahrung von Objekten, wobei jedes Regal (32) eine Vielzahl von freien Förderern (34) umfasst, die entlang zumindest einer Aufbewahrungsebene (36) und parallel zu einer Auszugsachse (E) angeordnet sind,
- einen Auszieher (22), der eine Plattform (52), die entlang einer Auszugsebene (56) angeordnet ist, und an dem Ende der Plattform eine Ansetzkante (72) umfasst, wobei die Plattform und die Ansetzkante eine Breite aufweisen, die größer als eine Breite der freien Förderer senkrecht zu der Auszugsachse ist, wobei der Auszieher (22) parallel zu der Auszugsachse (E) zwischen zumindest Folgendem verschoben werden kann:
einer eingezogenen Position entfernt von den Regalen, und zumindest einer Ansetzposition, in der sich die Ansetzkante (72) des Ausziehers (22) benachbart zu zumindest einem Regal (32) befindet, und in der die Auszugsebene (56) im Wesentlichen mit der Aufbewahrungsebene (36) des Regals zusammenfällt,
wobei der Auszieher von Objekten zumindest ein mechanisches Schleppmittel (70) aufweist, das auf der Ansetzkante (72) vorgesehen und konfiguriert ist, um mit zumindest einem freien Förderer (34) in der Ansetzposition in Eingriff zu kommen, um den freien Förderer in einer Förderbewegung während eines Vorgangs der Entnahme eines Objekts mitzuschleppen, um zumindest ein Objekt des Regals mit freien Förderern auf der Plattform (52) des Ausziehers parallel zu der Auszugsachse (E) zu verschieben,
- wobei der Auszieher ferner eine optische Barriere (74) umfasst, die im Wesentlichen senkrecht zu der Auszugsachse ist, benachbart zu der Ansetzkante (72) des Ausziehers (22) angeordnet und konfiguriert, um einen Durchlauf von Objekten in Richtung der Plattform (52) zu erfassen,
**dadurch gekennzeichnet, dass** der Auszieher ferner zumindest einen Objektschieber (80) umfasst, der auf dem Auszieher (22) vorgesehen ist, im Wesentlichen parallel zu der optischen Barriere (74) vorstehend auf der Ansetzkante (72) in Abstand zu der Auszugsebene (56), wobei der Objektschieber konfiguriert ist, um Objekte eines ausgewählten Regals bei einer Verschiebung des Ausziehers (22) aus der eingezogenen Position in Richtung einer versetzten Ansetzposition, in der die Auszugsebene (56) vertikal in Bezug auf die Aufbewahrungsebene (56) des ausgewählten Regals verschoben ist und in welcher der Objektschieber (80) dem ausgewählten Regal zugewandt ist, zurückzuschieben.

2. Anlage nach Anspruch 1, wobei der Schieber (80) unter der Auszugsebene (56) angeordnet ist.

3. Anlage nach einem der Ansprüche 1 oder 2, wobei der Auszieher mit Motorförderern (60, 60a, 60b, 60c, 60d, 60e, 60f) ausgestattet ist, die entlang der Auszugsebene (56) senkrecht zu der Ansetzkante (72) angeordnet sind.

4. Anlage nach einem der vorhergehenden Ansprüche, wobei der Schieber (80) einstückig mit einer mobilen Schublade (50) des Ausziehers (22) ist, der eine Verschiebungsfreiheit parallel zu der Auszugsachse (E) aufweist.

5. Anlage nach einem der vorhergehenden Ansprüche, wobei der Schieber (80) benachbart zu dem mechanischen Schleppmittel (70) angeordnet ist.

6. Anlage nach Anspruch 1, umfassend Regale (32) mit einer Vielzahl von Reihen (38a, 38b, 38c) für die Aufbewahrung von Objekten mit gleichem Bezug, und wobei die Plattform (52) und die Ansetzkante (72) des Ausziehers (22) eine Breite aufweisen, die größer als die Breite einer Reihe ist.

7. Verfahren zur Entnahme von Objekten einer Anlage nach einem der vorhergehenden Ansprüche, umfassend:
- die Auswahl eines Regals (32), das ein zu entnehmendes Objekt umfasst,
- zumindest ein Ansetzen des Ausziehers (22) gegenüber dem ausgewählten Regal,
- einen Vorgang der Entnahme von zumindest einem Objekt, das auf dem Regal angeordnet ist, und
- zumindest einen Vorgang des Zurückschiebens von Objekten.

8. Verfahren nach Anspruch 7, wobei der Vorgang des Zurückschiebens für das ausgewählte Regal umgesetzt wird.

9. Verfahren nach Anspruch 8, umfassend eine Verifizierung der Fortsetzung der optischen Barriere (74) im Anschluss an das Anlegen.

10. Verfahren nach Anspruch 9, wobei der Vorgang des Zurückschiebens von einer fehlenden Fortsetzung der optischen Barriere abhängt, die bei der Verifizierung der Fortsetzung der optischen Barriere festgestellt wird.

11. Verfahren nach einem der Ansprüche 7 bis 10, wobei der Vorgang des Zurückschiebens vor dem Ansetzen des Ausziehers gegenüber dem ausgewählten Regal für die Entnahme eines Objekts ausgeführt wird.

12. Verfahren nach einem der Ansprüche 7 bis 11, wobei der Vorgang des Zurückschiebens ein Verschieben des Ausziehers (22) parallel zu der Auszugsachse (E) über der Aufbewahrungsebene (36) des ausgewählten Regals (32) umfasst, wobei der Schieber (80) gegenüber dem ausgewählten Regal angeordnet ist.

13. Verfahren nach Anspruch 12, wobei die Verschiebung des Ausziehers (22) in Abstand zu einer Aufbewahrungsebene eines weiteren Regals der Regalanordnung durchgeführt wird.

14. Verfahren nach einem der Ansprüche 7 bis 13, wobei Vorgänge des Zurückschiebens in Zeiträumen der Inaktivität des Ausziehers umgesetzt werden.

## Claims

1. An installation (10) for storage and automated distribution of objects comprising:
- an array (12) of shelves (32) for the storage of objects, each shelf (32) comprising a plurality of free conveyors (34) arranged according to at least one storage plane (36) and parallel to an extraction axis (E),
- an extractor (22) comprising a platform (52) arranged according to an extraction plane (56) and at the end of the platform a docking edge (72), the platform and the docking edge being of a width which is greater than a width of the free conveyors perpendicularly to the extraction axis, which extractor (22) can be displaced parallel to the extraction axis (E) between at least:
a retracted position spaced from the shelves, and at least a docking position in which the docking edge (72) of the extractor (22) is adjacent to at least one shelf (32) and in which the extraction plane (56) is substantially coincident with
the storage plane (36) of said shelf,
the object extractor having at least one mechanical entrainment means (70) provided on the docking edge (72) and configured to come into engagement with at least one free conveyor (34) in the docking position to entrain said free conveyor in a conveying movement in an object removal operation to displace at least one object from the shelf with free conveyors on to the platform (52) of the extractor in parallel relationship with the extraction axis (E),
- the extractor further comprising an optical barrier (74) substantially perpendicular to the extraction axis and disposed in the vicinity of the docking edge (72) of the extractor (22) and configured to detect a passage of objects towards the platform (52),
**characterised in that** the extractor further comprises at least one object pushing means (80) disposed on the extractor (22) in substantially parallel relationship with the optical barrier (74) projecting on the docking edge (72) at a spacing from the extraction plane (56), the object pushing means being configured to push objects from a selected shelf upon a displacement of the extractor (62) from the retracted position towards an offset docking position in which the extraction plane (56) is offset vertically with respect to the storage plane (56) of the selected shelf and in which the object pushing means (80) faces the selected shelf.

2. An installation according to claim 1 wherein the pushing means (80) is disposed below the extraction plane (56).

3. An installation according to either one of claims 1 and 2 wherein the extractor is provided with motor-driven conveyors (60, 60a, 60b, 60c, 60d, 60e, 60f) arranged according to the extraction plane (56) perpendicularly to the docking edge (72).

4. An installation according to any one of the preceding claims wherein the pushing means (80) is fixed with respect to a moveable drawer (50) of the extractor (22) affording freedom of movement parallel to the extraction axis (E).

5. An installation according to any one of the preceding claims wherein the pushing means (80) is disposed in the vicinity of the mechanical entrainment means (70).

6. An installation according to claim 1 comprising shelves (32) having a plurality of bays (38a, 38b, 38c) for the storage of objects having the same reference and in which the platform (52) and the docking edge (72) of the extractor (22) are of a greater width than the width of a bay.

7. A process for removing objects from an installation according to any one of the preceding claims comprising:
- selection of a shelf (32) comprising an object to be removed,
- at least one docking of the extractor (22) in facing relationship with the selected shelf,
- an operation of removing at least one object disposed on the shelf, and
- at least one operation of pushing back objects.

8. A process according to claim 7 wherein the pushing operation is effected for the selected shelf.

9. A process according to claim 8 comprising verification of the continuity of the optical barrier (74) following the docking operation.

10. A process according to claim 9 wherein the pushing operation is conditional upon a lack of continuity of the optical barrier established upon verification of the continuity of the optical barrier.

11. A process according to any one of claims 7 to 10 wherein the pushing operation is effected prior to docking of the extractor in facing relationship with the selected shelf for the removal of an object.

12. A process according to any one of claims 7 to 11 wherein the pushing operation comprises displacement of the extractor (22) in parallel relationship with the extraction axis (E) above the storage plane (36) of the selected shelf (32), the pushing means (80) being disposed facing the selected shelf.

13. A process according to claim 12 wherein displacement of the extractor (22) is implemented at a spacing from a storage plane of another shelf of the array of shelves.

14. A process according to any one of claims 7 to 13 wherein the pushing operations are carried out in periods of inactivity of the extractor.
